Europäisches Patentamt

European Patent Office

Office européen des brevets

(11) Veröffentlichungsnummer : **0 393 152 B1**

(12) **EUROPÄISCHE PATENTSCHRIFT**

(45) Veröffentlichungstag der Patentschrift :
**09.12.92 Patentblatt 92/50**

(21) Anmeldenummer : **89903460.7**

(22) Anmeldetag : **22.03.89**

(86) Internationale Anmeldenummer :
**PCT/DE89/00178**

(87) Internationale Veröffentlichungsnummer :
**WO 89/09884 19.10.89 Gazette 89/25**

(51) Int. Cl.⁵ : **F16N 11/10**

(54) **EINRICHTUNG ZUM ZUFÜHREN VON FLÜSSIGEN, VISKOSEN ODER GASFÖRMIGEN MEDIEN.**

(30) Priorität : **06.04.88 DE 3811468**

(43) Veröffentlichungstag der Anmeldung :
**24.10.90 Patentblatt 90/43**

(45) Bekanntmachung des Hinweises auf die
Patenterteilung :
**09.12.92 Patentblatt 92/50**

(84) Benannte Vertragsstaaten :
**CH FR GB IT LI NL SE**

(56) Entgegenhaltungen :
**EP-A- 0 209 926
DE-A- 2 520 241**

(56) Entgegenhaltungen :
**DE-A- 3 532 335
DE-C- 343 551
US-A- 2 733 836
US-A- 3 430 731**

(73) Patentinhaber : **Satzinger GmbH & Co
Hammelburger Str. 21
W-8737 Euerdorf (DE)**

(72) Erfinder : **JORISSEN, Bernd
Hammelburger Str. 21
W-8737 Euerdorf (DE)**

(74) Vertreter : **Metzler, Jürgen, Dipl.-Ing.
Ketschendorfer Strasse 76
W-8630 Coburg (DE)**

EP 0 393 152 B1

Jouve, 18, rue Saint-Denis, 75001 PARIS

**Beschreibung**

Die vorliegende Erfindung betrifft eine Einrichtung zum Zuführen von flüssigen, viskosen oder gasförmigen Medien, insbesondere von Schmierstoffen, nach dem Oberbegriff der Ansprüche 1 und 2.

Es ist eine Schmierbüchse bekannt, die einen durch einen Trenneinsatz oder dgl. in eine Schmierstoffkammer und eine Druckgaskammer unterteilten Behälter aufweist, wobei ein der Druckgaskammer ein dichter ausdehnbarer Körper angeordnet ist, in dem sich eine zu einem beliebigen Zeitpunkt in Gang setzbare aus einem galvanischen Element bestehende Vorrichtung zur Entwicklung von Druckgas befindet, das im ausdehnbaren Körper einen Druck aufbaut, durch den er sich täglich um ein gewisses Maß ausdehnt und dadurch den Trenneinsatz verschiebt, der Schmierstoff aus der Schmierstoffkammer in die Schmierstelle drückt (DE-A-21 39 771).

Diese bekannte Ausführung weist ein alle Teile zu einer nicht zerlegbaren Einheit verbindendes Gehäuse auf, so daß eine Wiederverwendbarkeit bei Entleerung nicht gegeben ist. Auch besteht keine Möglichkeit, die Bestandteile dem Anwendungsfall entsprechend erst kurz vor dem Einbau der Schmierbüchse beliebig zu kombinieren. Es ist vielmehr eine umfangreiche Lagerhaltung beim Hersteller oder Verbraucher notwendig.

Es ist eine Schmierbüchse bekannt geworden, bei der der Vorratsbehälter für den Schmierstoff zusammen mit der Einrichtung zur elektrochemischen Gaserzeugung in einer gemeinsamen, austauschbaren Kartusche oder dgl. zusammengefaßt ist, die in einen zweiteilige ausgebildeten Aufnahmebehälter eingesetzt wird (US-A-3430731).

Bei dieser bekannten Ausführung sind nur Vorratsbehälter und Einrichtung zur elektrochemischen Gaserzeugung gemeinsam austauschbar. Ein Austausch nur des Vorratsbehälters oder nur der Gaserzeugungseinrichtung ist nicht möglich. Auch ist eine beliebige Kombination der Komponenten nicht machbar.

Schließlich ist eine Schmierbüchse bekannt, bei der der Vorratsbehälter mit einem abnehmbaren Deckel verschlossen ist, in dem vor Inbetriebnahme der Schmierbüchse mehrere durch eine zerstörbare Membran abgedeckte galvanische Elemente angeordnet sind. Der Vorratsbehälter weist einen verschiebbaren Trennkolben auf, der den Vorratsraum für den Schmierstoff von einem durch einen Balg oder dgl. gebildeten Aufnahmebehälter für den Elektrolyten trennt. Bei Inbetriebnahme der Schmierbüchse werden durch Druck auf den Deckel über zwischengeschaltete Kugeln die galvanischen Elemente durch die zerstörbaren Membrane in den Aufnahmebehälter für den Elektrolyten trennt. Bei Inbetriebnahme der Schmierbüchse werden durch Druck auf den Deckel über zwischengeschaltete Kugeln die galvanischen Element durch die zerstörbaren Membrane in den Aufnahmebehälter für den Elektrolyten gedrückt (EP-A-0209926)

Bei dieser bekannten Ausführung ist der Aufnahmebehälter für den Elektrolyten nicht selbst nach oben abgeschlossen ausgebildet, d.h. er kann nicht als separate abgeschlossene Einheit behandelt werden.

Die vorliegende Erfindung hat sich die Aufgabe gestellt, diese Nachteile zu vermeiden und eine Einrichtung zu schaffen, deren Komponenten weitgehend wiederverwendbar und die beliebig kombinierbar sind.

Dies wird nach der Erfindung durch die Merkmale des kennzeichnenden Teils jeweils der unabhängigen Ansprüche 1 und 2.

Dadurch ist es möglich, die wesentlichen Einzelteile der Einrichtung auch beim Verbraucher getrennt aufzubewahren, im Bedarfsfall beliebig zu kombinieren und später bei Entleerung auch eine Wiederverwendung zuzuführen. Durch die allseitig geschlossene Ausbildung wird eine ungewollte Entleerung verhindert.

Weiterbildungen der Erfindung sind in den Unteransprüchen beschrieben. Der Anspruch 3 beschreibt eine bevorzugte Ausführungform, bei der der eigentliche Vorratsbehälter als ein separater abgeschlossener Beutel oder dgl. ausgebildet ist, der in einen trennbaren Aufnahmebehälter eingesetzt wird und dessen Hülle bei Inbetriebnahme der Einrichtung zerstört wird. In diesem Fall erfolgt eine Bestückung oder Nachrüstung in einfacher Weise durch Einsetzen eines neuen Vorratsbeutels.

Der Anspruch 4 gibt Möglichkeiten der Trennung des Vorrats- bzw. Aufnahmebehälters an. Das trennbare Teil ist der Boden. Nach weiteren Merkmalen der Erfindung sind zu einem der Bestandteile Mittel zur Zerstörung der Abdeckfolie oder der Hülle des Beutels vorgesehen. Das können Vorsprünge, Spitzen, Schneiden oder dgl. sein, die am Deckel oder Boden angeordnet sind.

Diese Zelle wird nach einem weiteren Merkmal der Erfindung zweckmäßigerweise im Bereich einer der Trennfugen angeordnet, von der aus das Gas über Kanäle, Bohrungen oder dgl. zur Druckgaskammer geleitet wird.

Es sind selbstverständlich im Rahmen des Erfindungsgedanken noch Abänderungen möglich. So kann zwischen Druckgaskammer und Vorratskammer ein Kolben oder eine Trennvorrichtung vorgesehen werden. Schließlich kann auch noch eine Steuer- oder Regeleinheit für die Gaserzeugung vorgesehen werden.

Einzelheiten der Erfindungen sollen nachstehend anhand einiger Ausführungsbeispiele näher beschrieben werden.

Es zeigen:

Fig. 1 eine Schmierbüchse im Schnitt im zusam-

2

mengesetzten Zustand

Fig. 2 eine Schmierbüchse wie die nach Fig. 1 in der Ansicht mit einer Nachfüllvorrichtung

Fig. 3 die Einzelteile einer Schmierbüchse, ähnlich wie nach Fig. 1, jedoch mit getrennten Boden und Deckel

Fig.4 die Einzelteile einer Schmierbüchse mit einem separaten auswechselbaren Beutel als Vorratsbehälter

Auch wenn die Erfindung anhand von Beispielen von Schmierbüchsen beschrieben wird, ist es selbstverständlich möglich, damit andere Medien zuzuführen.

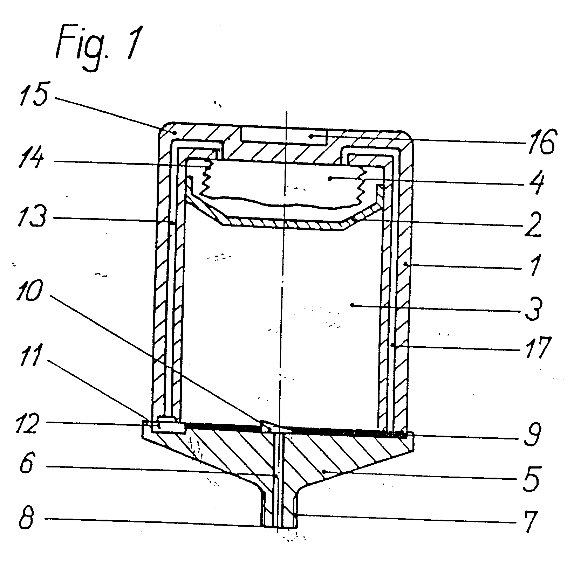

Die Schmierbüchse nach Fig. 1 besteht aus einem Vorratsbehälter (1), der einen durch eine Trennvorrichtung (2) abgetrennten Vorratsraum (3) für das Schmiermittel und eine Druckgaskammer (4) sowie einen trennbaren Boden (5) mit einer Auslaßöffnung (6) aufweist. Mit dem am trennbaren Boden (5) am Zapfenartigen Vorsprung (7) angeordneten Außengewinde (8) ist die Schmierbüchse am zu schmierenden Maschinenteil befestigt.

Vor dem Zusammenbau des Vorratsbehälters (1) mit dem trennbaren Boden (5) ist der Vorratsraum (3) mit einer Folie (9) verschlossen. Beim Zusammenbau der beiden Teile 1 und 5 zerstört eine Schneide (10) am trennbaren Boden (5) die Folie(9), so daß das Schmiermittel aus dem Vorratsraum (3) in die Auslaßöffnung 6 gedrückt werden kann.

Zur Erzeugung des erforderlichen Gasdruckes ist an der Trennfuge (11) zwischen Vorratsbehälter (1) und trennbarem Boden (5) eine aus Elektrolyt, Anode und Kathode bestehende kompakte Zelle (12) angeordnet. Das im dieser Zelle (12), z. B. Einschalten eines äußeren Stomkreises oder durch Stomerzeugung durch die Zellen selbst, erzeugte Gas wird über Kanäle (13) in die Druckgaskammer (4) geleitet und dehnt dort den Ausdehnungskörper 14 aus, der die Trennvorrichtung (2) und damit das Schmiermittel in Richtung auf die Auslaßöffnung (6) verschiebt.

Im Deckel (15) des Vorratsbehälters (1) ist eine Steuer- und Regeleinheit (16) angeordnet, die in den Stromkreis für die Zelle (12) eingebunden ist und mit der Gaserzeugung geregelt werden kann.

Um bei einer Wiederaufbereitung der Schmierbüchse die Trenneinrichtung (2) und den Ausdehnungskörper (14) in die Ausgangslage zurückschieben zu können, ist ein Entlüftungskanal (17) oder ein Entlüftungsventil vorgesehen.

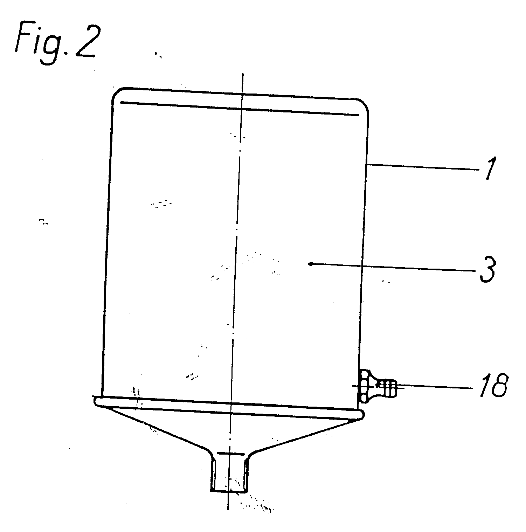

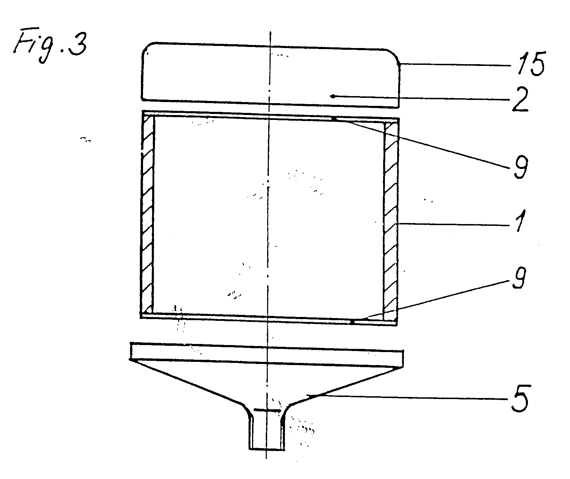

Fig. 2 zeigt ein Ausführungsbeispiel, bei dem im Bereich des Vorratsraumes (3) ein Schmiernippel (18) vorgesehen ist, über den mittels eine Fettpresse oder dgl. der Schmierstoffvorrat ergänzt werden kann. Beim Ausführungsbeispiel nach Fig. 3 ist der Vorrastbehälter (1) mit einem trennbaren Boden (5) und einem trennbaren Deckel (15) versehen. Vor dem Zusammenbau der Teile wird der Vorratsbehälter (1) oben und unten mit jeweils einer Folie (9) verschlossen, die beide beim Zusammenbau zerstört werden. Mit dem Deckel (15) ist dabei die Trennvorrichtung (2) verbunden, die nach dem Zusammenbau in die zylinrische Bohrung des Vorratsbehälters 1 eingreift. Im übrigen ist der Aufbau der einzelnen Teile wie bei Fig. 1 beschrieben.

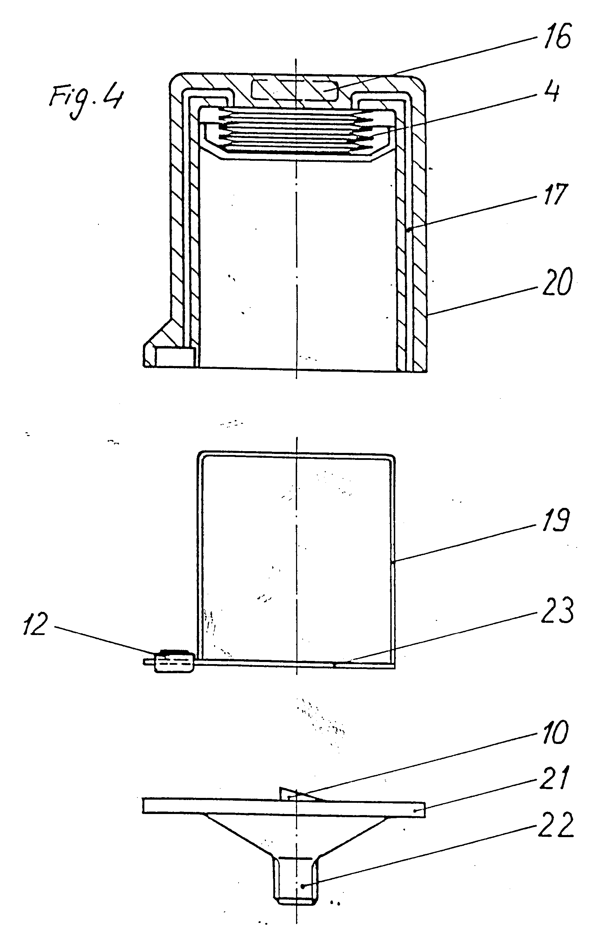

Beim Ausführungsbeipiel nach Fig. 4 ist der Vorratsbehälter (1) als ein separater, abgeschlossener Beutel (19) ausgebildet, der in einen trennbaren Aufnahmebehälter (20) eingesetzt wird. Der Aufnahmebehälter (20) wird durch einen Boden (21) abgeschlossen, der die Auslaßbohrung (22) aufweist. Mittels einer Schneide (10) wird beim Zusammensetzen der Teile die Hülle (23) des Beutels (19) zerstört, so daß Schmiermittel durch die Auslaßbohrung (22) ausgedrückt werden kann. Im übrigen ist der Aufbau des Aufnahmebehälters (20) ähnlich gestaltet wie der des Vorratsbehälters (1) nach Fig. 1. Auch die Gaserzeugung und Leitung in den Druckgasraum (4) erfolgt in gleicher Weise.

Die Zelle (12) ist hier mit dem Beutel (19) zu einer auswechselbaren Einheit verbunden.

**Patentansprüche**

1. Einrichtung zum Zuführen von flüssigen, viskosen oder gasförmigen Medien mit Hilfe eines auf elektrochemischem Wege erzeugten Druckgases, bestehend aus einem bis zur Inbetriebnahme verschlossenen Vorratsbehälter (1) zur Aufnahme des zuzuführenden Mediums, einem Gaserzeuger (12) zur Erzeugung des Druckgases und aus einer Druckgaskammer (4), in der sich das Druckgas sammelt, welches das im Vorratsbehälter (1) befindliche Medium über eine Auslaßöffnung (6,22) ausdrückt, **dadurch gekennzeichnet, daß** der Vorratsbehälter (1) und der Gaserzeuger (12) voneinander trennbar ausgebildet sind, daß der Vorratsbehälter (1) vor Inbetriebnahme mit einer bei Inbetriebnahme zerstörbaren Folie (9) allseitig geschlossen und für sich als separate Einheit behandelt ist, und daß der Gaserzeuger als eine aus Elektrolyt, Anode und Kathode bestehende Kompakte Zelle (12) ausgebildet ist.

2. Einrichtung zum Zuführen von flüssigen, viskosen oder gasförmigen Medien mit Hilfe eines auf elektrochemischem Wege erzeugten Druckgases, bestehend aus einem bis zur Inbetriebnahme verschlossenen Vorratsbehälter (1) zur Aufnahme des zuzuführenden Mediums, einem Gaserzeuger (12) zur Erzeugung des Druckgases und aus einer Druckgaskammer (4), in der sich das Druckgas sammelt, welches das im Vorratsbehälter (1) befindliche Medium über eine Auslaßöffnung (6,22) ausdrückt, **dadurch gekennzeichnet, daß** der Vorratsbehälter (1) als separater auswechselbarer Beutel (19) mit einer als Gaserzeuger ausgebildeten, aus Elektrolyt, Anode und Kathode bestehenden kompakten Zelle (12) zu einer auswechselbaren Einheit verbunden ist, wobei vor Inbetriebnahme der Vorratsbehälter (1) mit einer bei Inbetriebnahme zerstörbaren Hülle (23) geschlossen ist.

3. Einrichtung nach Anspruch 2 dadurch gekennzeichnet, daß der Vorratsbehälter (1) in einem trennbaren Aufnahmebehälter (20) einsetzbar ist.

4. Einrichtung nach einem der Ansprüche 1 bis 3, dadurch gekennzeichnet, daß der Vorrats- (1) oder diesen aufnehmender Aufnahmebehälter (20) mit einem von diesem trennbaren Boden (5,21), der die Auslaßöffnung (6,22) aufweist, versehen ist.

5. Einrichtung nach einem der Ansprüche 1 bis 4, gekennzeichnet durch Mittel, wie Vorsprünge, Spitzen, Schneiden (10) oder dgl. zur Zerstörung der Folie (9) bzw. Hülle (23).

6. Einrichtung nach Anspruch 5, dadurch gekennzeichnet, daß die Mittel (10) zur Zerstörung der Folie (9) oder Hülle (23) der Beutels (19) am trennbaren Teil (5,21) angeordnet sind.

7. Einrichtung nach Anspruch 1 bis 6, dadurch gekennzeichnet, daß die Zelle (12) im Bereich einer Trennfuge (11) des Vorrats- (1) oder des diesen aufnehmenden, Aufnahmebehälters (20) angeordnet ist und Kanäle (13) oder dgl. zur Leitung des Druckgases in die Druckgaskammer (4) vorgesehen sind.

**Claims**

1. A device for supplying liquid, viscous or gaseous media by means of an electrochemically produced pressurised gas, comprising a reservoir (1) which is closed until operation commences and which serves to accommodate the gas to be supplied, a gas-producing means (12) for producing the pressurised gas, and comprising a pressurised gas chamber (4) wherein the pressurised as accumulates which expels the medium situated in the reservoir (1) via an outlet opening (6, 22), characterised in that the reservoir (1) and the gas-producing means (12) are designed to be separable from one another, in that before operation commences the reservoir (1) is closed on all sides by a sheet (9) which can be destroyed when operation commences, and is treated per se as a separate unit, and in that the gas-producing means takes the form of a compact cell (12) comprising electrolyte, anode and cathode.

2. A device for supplying liquid, viscous or gaseous media by means of an electrochemically produced pressurised gas, comprising a reservoir (1) which is closed until operation commences and which serves to accommodate the gas to be supplied, a gas-producing means (12) for producing the pressurised gas, and comprising a pressurised gas chamber (4) wherein the pressurised gas accumulates which expels the medium situated in the reservoir (1) via an outlet opening (6, 22), characterised in that as a separate replaceable bag (19) the reservoir (1) is connected with a compact cell (12), which comprises electrolyte, anode and cathode and which forms a gas-producing means, to form a replaceable unit, wherein before operation commences the reservoir (1) is closed by an envelope (23) which can be destroyed when operation commences.

3. A device according to Claim 2, characterised in that the reservoir (1) can be inserted in a separable accommodating container (20).

4. A device according to any one of Claims 1 to 3, characterised in that the reservoir (1) or the accommodating container (20) accommodating it is provided with a bottom (5, 21) which is separable from the latter and which has the outlet opening (6, 22).

5. A device according to any one of Claims 1 to 4, characterised by means, such as projections, points, cutting edges (10) or the like for destroying the sheet (9) and/or envelope (23).

6. A device according to Claim 5, characterised in that the means (10) for destroying the sheet (9) or envelope (23) of the bag (19) are disposed on the separable part (5, 21).

7. A device according to any one of Claims 1 to 6, characterised in that the cell (12) is disposed in the vicinity of a separating line (11) of the reservoir (1) or the accommodating container (20) accommodating it, and passages (13) or the like are provided to direct the pressurised gas into the pressurised gas chamber (4).

**Revendications**

1. Dispositif pour l'amenée de fluides liquides, visqueux ou gazeux à l'aide d'un gaz sous pression produit par voie électrochimique, composé d'un réservoir de réserve (1), obturé jusqu'à la mise en service, destiné à recevoir le fluide à alimenter, d'un générateur de gaz (12), destiné à produire le gaz sous pression, et d'une chambre à gaz sous pression (4) dans laquelle s'accumule le gaz sous pression qui expulse, par l'orifice de sortie (6, 22), le fluide se trouvant dans le réservoir à réserve (1), caractérisé en ce que le réservoir à réserve (1) et le générateur de gaz (12) sont réalisés séparables l'un de l'autre, que le réservoir à réserve (1) est, avant la mise ne service, fermé de tous les côtés par un film (9) pouvant être détruit lors de la mise en service et est traité comme ensemble séparé en soi et que le générateur de gaz se présente sous forme d'une cellule compacte (12) composée d'électrolyte, d'une anode et d'une cathode.

2. Dispositif pour l'amenée de fluides liquides, visqueux ou gazeux à l'aide d'un gaz sous pression produit par voie électrochimique, composé d'un réservoir de réserve (1), obturé jusqu'à la mise en service, destiné à recevoir le fluide à alimenter, d'un générateur de gaz (12), destiné à produire le gaz sous pression, et d'une chambre à gaz sous pression (4) dans laquelle s'accumule le gaz sous pression qui expulse, par l'orifice de sortie (6, 22), le fluide se trouvant dans le réservoir à réserve (1), caractérisé en ce que le réservoir à réserve (1) sous forme d'un sachet échangeable (19) est assemblé en une unité échangeable avec une cellule compacte (12) composée d'électrolyte, d'une anode et d'une cathode, se présentant sous forme de générateur de gaz, le réservoir à réserve (1) étant fermé, avant la mise en service, par une enveloppe (23) destructible lors de la mise en service.

3. Dispositif suivant la revendication 2, caractérisé en ce que le réservoir à réserve (1) peut être placé dans un conteneur de réception (20) séparable.

4. Dispositif suivant l'une des revendications 1 à 3, caractérisé en ce que le réservoir à réserve (1), ou le conteneur de réception (20) qui le reçoit, est pourvu d'un fond (5, 21), qui présente l'orifice de sortie (6, 22), pouvant être séparé de ce dernier.

5. Dispositif suivant l'une des revendications 1 à 4, caractérisé par des moyens, tels que saillies, pointes, arêtes (10) ou similaires, destinés à détruire le film (9) ou l'enveloppe (23).

6. Dispositif suivant la revendication 5, caractérisé en ce que les moyens (10) destinés à détruire le film (9) ou l'enveloppe (23) du sachet (19) sont disposés sur la partie séparable (5, 21).

7. Dispositif suivant les revendications 1 à 6, caractérisé en ce que la cellule (12) est disposée à l'endroit d'un joint de séparation (11) du réservoir à réserve (1) ou du conteneur de réception (20) qui le reçoit et qu'il est prévu des canaux (13) ou similaires pour l'amenée du gaz sous pression dans la chambre à gaz sous pression (4).

Fig. 1

Fig.2

1

3

18

Fig.3

Fig. 4